# EUROPEAN PATENT APPLICATION

(11) **EP 1 189 427 A2**
(43) Date of publication of application: **20.03.2002**
(21) Application number: 01121368.3
(22) Date of filing: 06.09.2001
(51) Int. Cl.: H04N 1/32

(54) **A method of managing an electronic mark using an agent**

(30) Priority: 14.09.2000 JP 2000280366
(71) Applicant: Hitachi, Ltd., Chiyoda-ku, Tokyo 101-8010 (JP); Hitachi Government and Public Corporation System Engineering Ltd., Tokyo (JP)
(72) Inventor: Shouduka, Kenichi, Hitachi Government and Public, Tokyo 136-0075 (JP); Toyoshima, Hisashi, Hitachi, Ltd., Intellectual, Tokyo 100-8220 (JP); Kikuta, Atsushi, Hitachi, Ltd., Intellectual, Tokyo 100-8220 (JP); Yonezawa, Yasushi, Hitachi Government and Public, Tokyo 136-0075 (JP)
(74) Representative: Strehl Schübel-Hopf & Partner

(57) **Abstract**

A method of managing an electronic mark using an agent includes the steps of filing (210) an application of issuing the electronic mark together with user information to be buried in the electronic mark, entrusting (210) generation of the electronic mark together with the information of the user who applied for issuance of the electronic mark and the original image information for representing original image data where the user information is to be buried; generating (410) the electronic mark by burying the information of the user in the original image data represented by the original image information to be generated; and providing (312) the generated electronic mark to a mark user who filed an application of issuing the electronic mark.

## Description

### BACKGROUND OF THE INVENTION

The present invention relates to a method of managing an electronic mark using an agent which method is arranged to act for an electronic mark manager for the purpose of certifying correctness of electronic data and ameliorating the added value thereof, and more particularly to the technology being effective in being applied to the system of managing an electronic mark using an agent which system is arranged to act for an electronic mark issuer and a server of certifying service for the purpose of certifying the correctness and ameliorating the added value of a web site on the internet.

Individuals as well as lots of enterprises have heretofore opened a homepage in a WWW (World Wide Web) server for casting individual information, selling various kinds of commodities, and providing various kinds of services through the internet. Any one can easily cast information through his homepage on the internet. Likewise, any one can easily access the homepage on the internet.

As mentioned above, such a web site homepage on the internet may be easily accessed. On the other hand, the content of the homepage may be interpolated by false access. The interpolated homepage cannot be easily identified by the third party. Further, even if the information on the homepage is not interpolated, it is quite difficult for the third party to determine whether or not the information itself is reliable.

In order to solve this sort of problem, an electronic mark has been considered. The system of the electronic mark (hereafter often referred to as an internet mark or abbreviated as an IM) is arranged so that the authentication information used for authenticating if the content of an HTML (HyperText Markup Language) file on a certain homepage is interpolated is buried as an electronic watermark. When someone accesses the homepage, the person performs the authenticating process through the authentication information of the electronic mark pasted on the homepage for the purpose of determining if the homepage is interpolated.

As another technology, a method has been proposed in which if the content of a business, such as sales and service provision carried out on the homepages, reaches the predetermined content level as a result of the examination by the third authority, the electronic mark having the authentication information for proving the homepage is opened by an excellent dealer or enterprise is issued to the person or enterprise, and the electronic mark pasted on the homepage indicates that the information on the homepage is reliable.

The method of generating authenticative electronic data for strictly authenticating correctness of the electronic data and visually showing the correctness to the user of the electronic data is described in JP-A-2000-78125. Roughly speaking, the method is comprised of the steps of adding a digital signature to the authentication information for authenticating an electronic mark B such as a web page or a trademark, burying the authentication information with the digital signature in an electronic mark A as an invisible electronic watermark, and burying the electronic mark A for visually representing correctness in the electronic mark B as a visible electronic watermark.

The use of the foregoing electronic mark makes it possible to certify correctness of the electronic data such as a homepage on the internet and improve the added value of each kind of business content provided by the homepage. However, a considerable amount of facilities and persons are required for managing the associated operations of the electronic mark such as issuance of the electronic marks in response to the applications of lots of homepage providers, change of the content of each homepage, change of a business content, update of the electronic mark when the expiration date of the electronic mark comes, and strict authentication at the time of issuing the electronic mark using the specific information. The difficulty in securing the facilities and persons therefore makes it difficult to certify correctness of the electronic data or improve the added value using the electronic mark.

### SUMMARY OF THE INVENTION

It is an object of the present invention to provide a technology which enables to solve the foregoing problem, allows a mark manager to easily issue the electronic mark, and keeps the electronic mark issued by the mark manager at a predetermined quality level.

The present invention concerns with the system of managing an electronic mark using an agent. Specifically, the system allows the mark manager to act for a manager of an electronic mark issued to a mark user.

In the system of managing an electronic mark using an agent according to the present invention, a mark user who would like to use an electronic mark like an internet mark files to the mark manager an application of issuing the electronic mark with the user information to be buried in the electronic mark.

In receipt of the application given by the mark user, the mark manager who manages the issuance of the electronic mark examines the content of the user information for determining if the electronic mark is to be issued to the mark user. If the electronic mark is to be issued, the mark manager entrusts to an agent which acts for a mark manager generation of the electronic mark together with the information of a user about whom the electronic mark was applied to be issued and the original image information for representing original image data where the user information is to be buried.

In receipt of the entrustment of the generation of the electronic mark from the mark manager, the mark agent generates the electronic mark by burying the information of the user about whom the electronic mark is generated in the original image data indicated by the original image information being applied and registers in a database the authentication information having the user information used in generation as the issuance information. Then, the mark manager accepts the generated electronic mark from the mark agent and then provides the electronic mark to the mark user who filed the application of issuing the electronic mark.

In response to the entrustments of issuing electronic marks from a plurality of mark managers, the mark agent generates an electronic mark for each mark user, manages the issuance information, periodically check the content of the issuance information, and makes the electronic mark passed through the expiration date invalid.

In the case of changing the user information such as the business content provided by the mark user, the mark agent accepts the updated user information from the mark user through the mark manager and updates the electronic mark by using the updated user information and the previous user information managed as the issuance information.

On the other hand, when a person makes access to the homepage to which the electronic mark issued as described above is pasted, if the person requests to strictly authenticate the electronic mark pasted on the homepage, the mark agent authenticates the electronic mark by using the issuance information registered in generating the electronic mark. If the electronic mark is incorrect as a result of the authentication, the fact is reported to the mark manager.

As described above, the system of managing an electronic mark using an agent allows the mark manager to act for a manager of the electronic mark to be issued to the mark user. This makes it possible to facilitate issuance of the electronic mark by the mark manager and keep the electronic mark issued by the mark manager at a predetermined quality level.

### BRIEF DESCRIPTION OF THE DRAWINGS

Fig. 1 is a diagram showing a schematic configuration of a system of managing an electronic mark using an agent according to an embodiment of the invention;
Fig. 2 is a block diagram showing a schematic configuration of a mark user device 100 included in the embodiment;
Fig. 3 is a block diagram showing a schematic configuration of a mark manager device 101 included in the embodiment;
Fig. 4 is a block diagram showing a schematic configuration of a mark management agent device 102 included in the embodiment;
Fig. 5 is a block diagram showing a schematic configuration of a mark referring person device 103 included in the embodiment;
Fig. 6 is a flowchart showing a procedure of filing an application of issuing a mark according to the embodiment of the invention;
Fig. 7 is a view showing an example of user information included in the embodiment;
Fig. 8 is a flowchart showing a procedure of entrusting generation of a mark included in the embodiment;
Fig. 9 is a view showing mark user information DB307 included in the embodiment;
Fig. 10 is a flowchart showing a procedure of generating a mark included in the embodiment;
Fig. 11 is a table showing an example of mark manager information DB407 included in the embodiment;
Fig. 12 is a table showing an example of issuance information management DB408 included in the embodiment;
Fig. 13 is a view showing an example of authentication information included in the embodiment;
Fig. 14 is a flowchart showing a procedure of filing an application of updating a mark included in the embodiment;
Fig. 15 is a flowchart showing a procedure of entrusting update of a mark included in the embodiment;
Fig. 16 is a flowchart showing a procedure of updating a mark included in the embodiment;
Fig. 17 is a flowchart showing a procedure of instructing change of a using state included in the embodiment;
Fig. 18 is a flowchart showing a procedure of changing the using state included in the embodiment;
Fig. 19 is a flowchart showing a procedure of monitoring the using state included in the embodiment;
Fig. 20 is a flowchart showing a procedure of changing the using state included in the embodiment;
Fig. 21 is a flowchart showing a procedure of entrusting strict authentication included in the embodiment; and
Fig. 22 is a flowchart showing a procedure of entrusting strict authentication included in the embodiment.

### DESCRIPTION OF THE EMBODIMENTS

Hereafter, the description will be oriented to a system of managing an electronic mark using an agent according to an embodiment of the invention, the system being arranged to act for management of an internet mark corresponding to the electronic mark for certifying correctness and improve added value of electronic data such as a homepage on the internet.

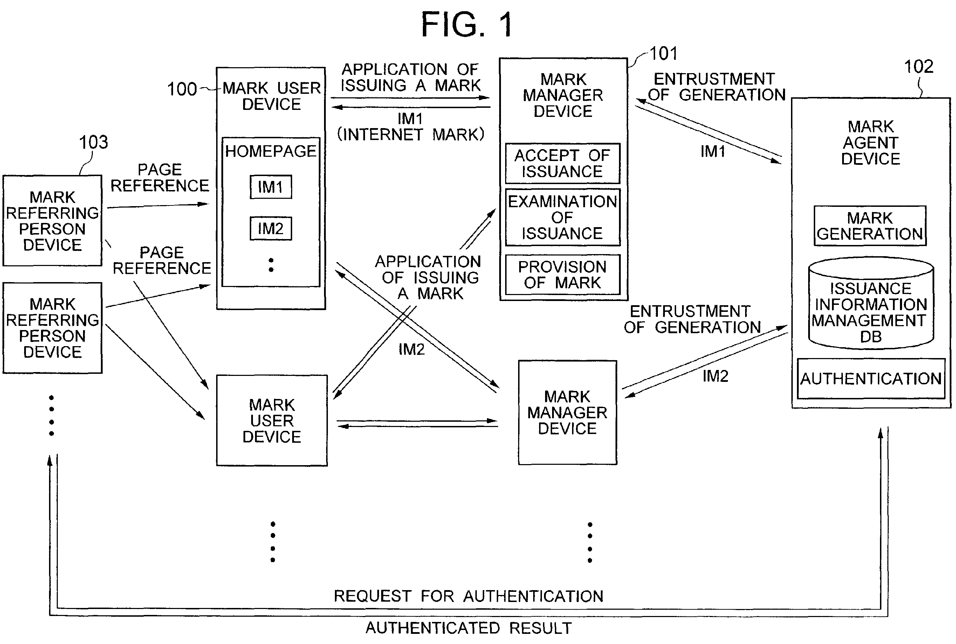

Fig. 1 shows a schematic configuration of the system of managing an electronic mark using an agent according to this embodiment. As shown, the system includes a mark user device 100, a mark manager device 101, a mark management agent device 102, and a mark referring person device 103.

The mark user device 100 is an information processing device on the side of the mark user who would use the internet mark by pasting the internet mark provided by the mark manager on the homepage provided by the user himself. The mark manager device 101 is an information processing device on the side of the mark manager who determines whether or not the internet mark is to be provided to the mark user who would like to use the internet mark and entrusts processes such as generation, update and authentication of the internet mark to be provided by the mark user to the mark agent.

The mark management agent device 102 is an information processing device on the side of the mark agent which acts for the processes such as generation, update and authentication of the internet mark in response to the request given from the mark manager. The mark referring person device 103 is an information processing device on the side of the mark referring person who accesses the homepage provided by the mark user and entrusts execution of the authentication of the electronic mark pasted on the homepage to the mark agent.

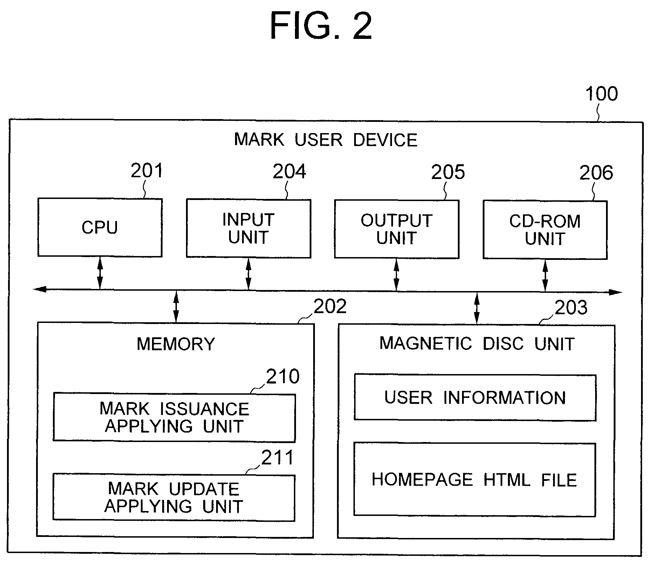

Fig. 2 shows a schematic configuration of the mark user device 100 included in the embodiment. As shown, the mark user device 100 includes a CPU 201, a memory 202, a magnetic disk unit 203, an input unit 204, an output unit 205, and a CD-ROM unit 206.

The CPU 201 operates to control the overall operation of the mark user device 100. The memory 202 is served to load various kinds of programs and data for controlling the overall operation of the mark user device 100.

The magnetic disk unit 203 is served to store those various programs and data. The input unit 204 is used for inputting various kinds of data for using the internet mark. The output unit 205 is used for outputting various kinds of data in association with the use of the internet mark. The CD-ROM unit 206 is used for reading the content of the CD-ROM in which various kinds of programs are recorded.

Further, the mark user device 100 includes a mark issuance application unit 210 and a mark update application unit 211. The mark issuance application unit 210 is served to file to the mark manager device 101 the application of issuing the internet mark together with the user information to be buried in the internet mark. The mark update application unit 211 is served to specify the updated portion of the user information buried in the internet mark and file an application of updating the specified portion of the internet mark to the mark manager device 101.

The program, on which the mark user device 100 is served as the mark issuance application unit 210 and the mark update application unit 211, is recorded on a recording medium such as a CD-ROM or stored in a magnetic disk, and then loaded in the memory, from which the program is executed. The recording medium for recording the program may be another medium except the CD-ROM.

The mark user device 100 of this embodiment operates to file an application of issuing and updating the internet mark to the mark manager device 101 through the network. In place of the network, the application document may be sent by snail mail to the mark manager for applying the issuance and the update of the internet mark.

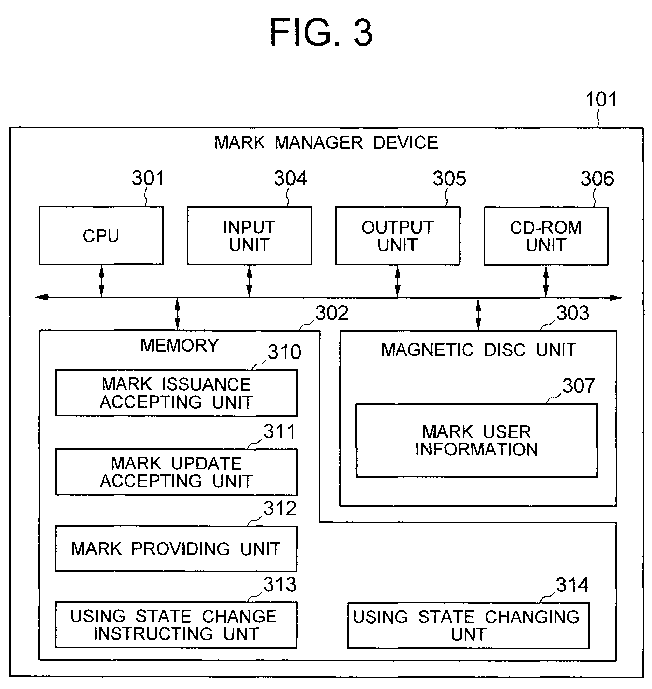

Fig. 3 shows a schematic configuration of the mark manager device 101 included in this embodiment. As shown, the mark manager device 101 includes a CPU 301, a memory 302, a magnetic disk unit 303, an input unit 304, an output unit 305, a CD-ROM unit 306, and a mark user information DB 307.

The CPU 301 is served to control the overall operation of the mark manager device 101. The memory 302 is served to load various kinds of programs and data used for controlling the overall operation of the mark manager device 101.

The magnetic disk unit 303 is served to store those various programs and data. The input unit 304 is used for inputting various kinds of data for entrusting management of the internet mark to the mark agent. The output unit 305 is used for outputting various kinds of data associated with the entrustment of the management of the internet mark.

The CD-ROM unit 306 is served to read the content of the CD-ROM recorded in various kinds of programs. The mark user information DB 307 is a database for saving the information on the mark users who have filed an application of issuing the internet mark to the mark manager device 101.

The mark manager device 101 includes a mark issuance accepting unit 310, a mark update accepting unit 311, a mark providing unit 312, a using state change instructing unit 313, and a using state changing unit 314.

The mark issuance accepting unit 310 is served to accept the application of issuing the internet mark from the mark user device 100 and entrust to the mark management agent device 102 generation of the internet mark together with the information of the user who filed an application of issuing the internet mark and original image information for representing original image data where the user information is to be buried.

The mark update accepting unit 311 is served to accept the application of updating the internet mark from the mark user device 100 and entrust to the mark agent 102 update of the internet mark together with the information of the user who filed an application of updating the internet mark and the original image information for representing original image data where the user information is to be buried.

The mark providing unit 312 is served to provide the internet mark generated or updated on the mark management agent device 102 to the mark user of the mark user device 100 which has filed an application of issuing or updating the internet mark.

In response to the instruction of changing the using state of the internet mark from the mark manager, the using state change instructing unit 313 is served to change the using state included in the mark user information DB 307 and instruct change of the using state of the internet mark to the mark management agent device 102. The using state changing unit 314 is served to change the using state of the mark user information DB 307 in response to the notice given from the mark management agent device 102.

The program, on which the mark manager device 101 functions as the mark issuance accepting unit 310, the mark update accepting unit 311, the mark providing unit 312, the using state change instructing unit 313 and the using state changing unit 314, is recorded on a recording medium like a CD-ROM or stored in a magnetic disk, and then is loaded in a memory from which the program is executed. The recording medium for recording the program may be another medium rather than the CD-ROM.

The mark manager device 101 of this embodiment is served to accept the application of issuing or updating the internet mark from the mark user device 100 through the network. In place of the network, the mark user may mail the application to the mark manager side 101.

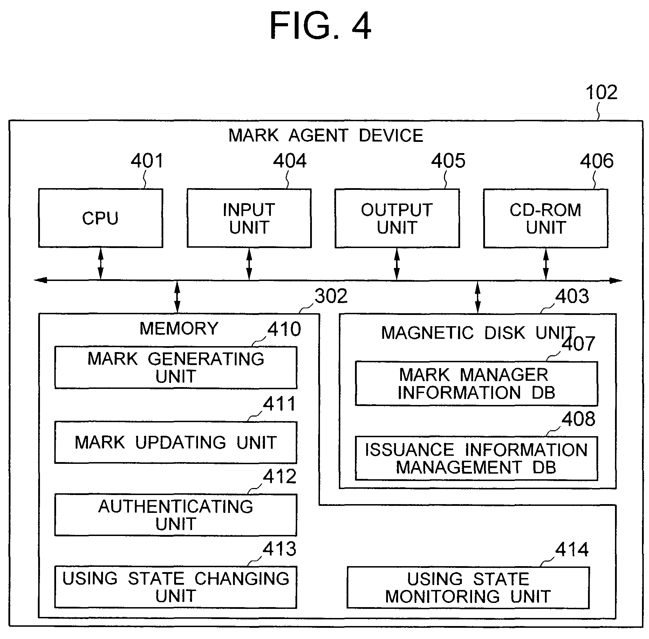

Fig. 4 shows a schematic configuration of the mark management agent device 102 included in this embodiment.

As shown in Fig. 4, the mark management agent device 102 includes a CPU 401, a memory 402, a magnetic disk unit 403, an input unit 404, an output unit 405, a CD-ROM unit 406, a mark manager information DB 407, and an issuance information management DB 408.

The CPU 401 is served to control the overall operation of the mark management agent device 102. The memory 402 is served to load various kinds of programs and data used for controlling the overall operation of the mark management agent device 102.

The magnetic disk unit 403 is served to save those various programs and data. The input unit 404 is served to carry out various inputs used for acting as a manager of the internet mark. The output unit 405 is served to output various kinds of data associated with the management of the internet mark.

The CD-ROM unit 406 is served to read the content of the CD-ROM on which those programs are recorded. The mark manager information DB 407 is a database for saving the information on the mark managers who are requesting to act for managers of the internet mark. The issuance information management DB 408 is a database for saving issuance information of the internet mark for each of the internet marks saved in the mark manager information DB 407.

The mark management agent device 102 includes a mark generating unit 410, a mark updating unit 411, an authenticating unit 412, a using state changing unit 413, and a using state monitoring unit 414.

The mark generating unit 410 is served to accept entrustment of generating the internet mark from the mark manager device 101 and generate an internet mark by burying the information of the user about whom the internet mark is generated in the original image data represented by the original image information in request.

The mark updating unit 411 is served to accept entrustment of updating the internet mark from the mark manager device 101 and update the internet mark by burying the information of the user about whom the internet mark is updated in the original image data represented by the original image information in request.

The authenticating unit 412 is served to accept entrustment of strictly authenticating the internet mark from the mark referring person device 103 and determine if the electronic data pasted on the internet mark is interpolated and if the internet mark is valid by using the user information registered in the mark management agent device 102 in generating the internet mark.

The using state changing unit 413 is served to accept an instruction of changing the using state of the internet mark from the mark manager device 101 and change the using state of the internet mark saved in the issuance information management DB 408.

The using state monitoring unit 414 is served to monitor the expiration date of the internet mark the authentication information of which is managed in the issuance information management DB 408, change the using state of the internet mark whose expiration date has come into "invalid", and notify the mark manager device 101 of the change of the using state of that internet mark.

The program, on which the mark management agent device 102 functions as the mark generating unit 410, the mark updating unit 411, the authenticating unit 412, the using state changing unit 413 and the using state monitoring unit 414, is recorded on a recording medium like a CD-ROM or saved on a magnetic disk, for example, and then loaded in the memory from which the program is executed. The recording medium for recording the program may be another recording medium rather than the CD-ROM.

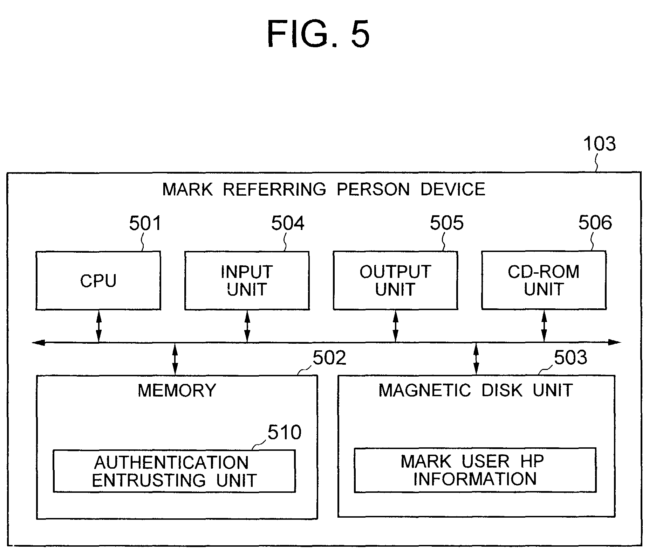

Fig. 5 shows a schematic configuration of the mark referring person device 103 included in this embodiment. As shown, the mark referring person device 103 includes a CPU 501, a memory 502, a magnetic disk unit 503, an input unit 504, an output unit 505, and a CD-ROM unit 506.

The CPU 501 is served to control the overall operation of the mark referring person device 103. The memory 502 is served to load various kinds of programs and data used for controlling the overall operation of the mark referring person device 103.

The magnetic disk unit 503 is served to save those programs and data. The input unit 504 is served to carry out various inputs used for accessing the homepage with the internet mark pasted thereon.

The output unit 505 is served to output various data associated with the access of the homepage with the internet mark pasted thereon. The CD-ROM unit 506 is served to read the content of the CD-ROM on which various kinds of programs are recorded.

Further, the mark referring person device 103 includes an authentication entrusting unit 510. The authentication entrusting unit 510 is served to entrust the strict authentication of the internet mark pasted on the homepage of the mark referring person device 100.

The program, on which the mark referring person device 103 functions as the authentication entrusting unit 510, is stored on a recording medium like a CD-ROM and saved on a magnetic disk, for example, and then is loaded in the memory from which the program is executed.

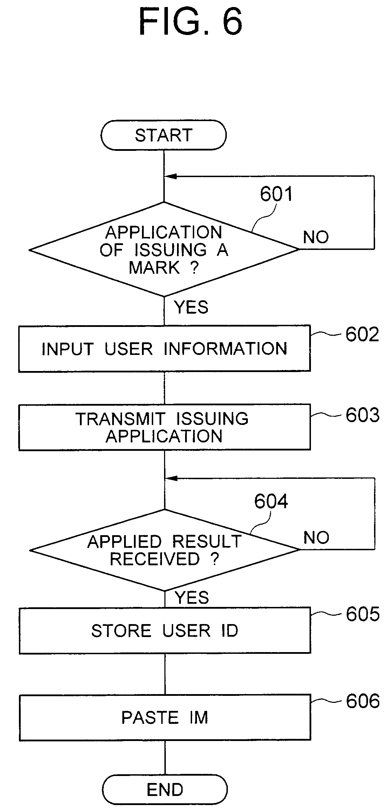

Fig. 6 is a flowchart showing a procedure of filing an application of issuing the mark included in this embodiment. As shown, the process is executed of filing an application of issuing the internet mark together with the user information buried in the internet mark to the mark manager device 101.

In this embodiment, in a case that the mark user pastes the internet mark provided by a specific mark manager on the homepage being presented by the mark user for certifying correctness and improving added value of the web site of the mark user, the process is executed of filing an application of issuing the internet mark to the mark manager.

In a step 601, the mark issuance applying unit 210 of the mark user device 100 is served to check if the application of issuing the mark is instructed by a mark user who would like to use the internet mark. If instructed, the process goes to a step 602.

In a step 602, the process is executed of entering as user information the information on the homepage with the internet mark pasted thereon. In a step 603, the process is executed of transmitting the inputted user information to the mark manager device 101 which manages issuance of the internet mark being used and filing an application of issuing the internet mark to the mark manager.

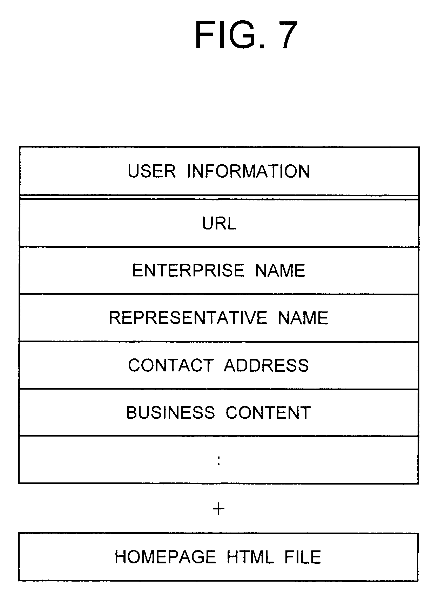

Fig. 7 shows an example of the user information included in this embodiment. As shown, the mark issuance applying unit 210 of the mark user device 100 is served to transmit to the mark manager device 101 a URL (Uniform Resource Locators) of a homepage on which the internet mark is to be pasted, a name of an enterprise which runs a certain business on the homepage, a representative name of the enterprise, a contact address of the representative, a content of the business done on the homepage, and a HTML file of the homepage with the internet mark pasted thereon, all of which are included in the user information.

In Fig. 6, in a step 604, the process is executed of checking if the applied result is received from the mark manager device 101. If yes, the process goes to a step 605. If the issuance of the applied internet mark is permitted, the process is executed of reading the user ID and the internet mark accepted as the applied result and saving the read user ID in a predetermined file in the step 605. Then, in a step 606, the process is executed of adding a tag for displaying the read internet mark to the HTML file of the homepage and pasting the internet mark on the home page.

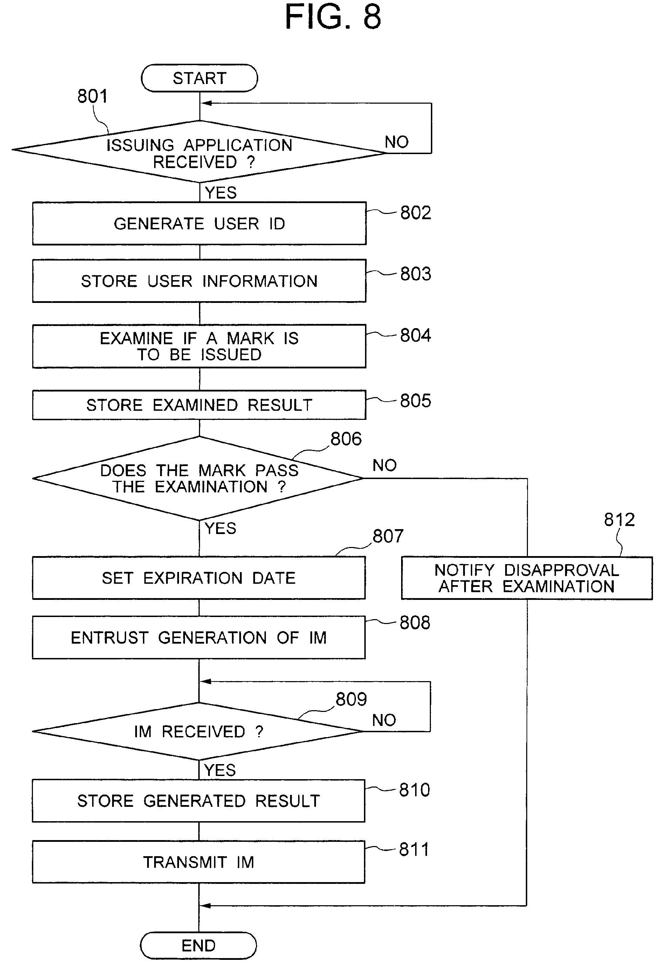

Fig. 8 is a flowchart showing a procedure of requesting to generate the mark included in this embodiment. As shown, the mark issuance accepting unit 310 provided in the mark manager device 101 is served to accept the application of issuing the internet mark from the mark user device 100 and then to entrust to the mark management agent device 102 the generation of the internet mark together with the information of the user about whom the issuance of the internet mark is applied and the original image information for representing the original image data in which the user information is to be buried. The mark providing unit 312 is served to provide the internet mark generated by the mark management agent device 102 to the mark user of the mark user device 100 which has filed an application of issuing the internet mark.

In this embodiment, when the mark manager accepts the application of filing the internet mark from the mark user, the mark manager determines if the internet mark of the mark manager is to be provided to the mark user who would like to use the internet mark and then entrusts generation, update and authentication of the internet mark to be provided to the mark user to the mark agent.

In a step 801, the mark issuance accepting unit 310 located in the mark manager device 101 is served to check if the application of issuing the internet mark has been received from the mark user device 100. If the application has been received, the process goes to a step 802.

In the step 802, the process is executed of generating a user ID for identifying the mark user who has filed an application of issuing the mark. In a step 803, then, the process is executed of generating a record to be identified on the generated user ID in the mark user information DB 307 and then storing the content of the user information accepted as the application of issuing the mark in the identified record.

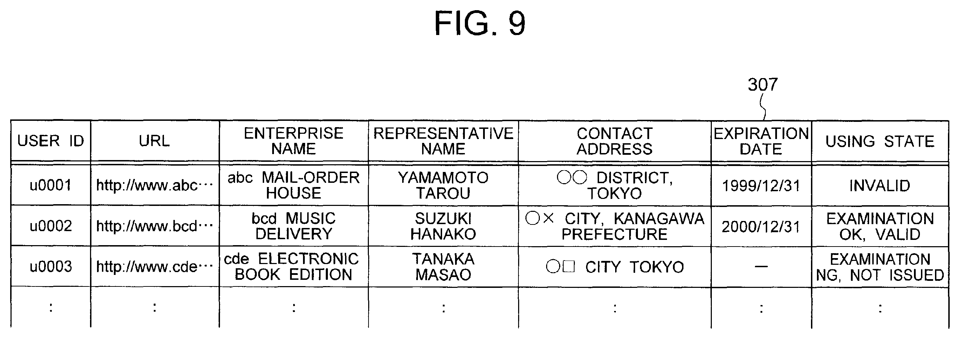

Fig. 9 shows an example of the mark user information DB 307 included in this embodiment. As shown in Fig. 9, the mark user information DB 307 stores a user ID for identifying the mark user, a URL received as the user information, an enterprise name, a representative name and his or her contact address, an expiration date of the internet mark if it is permitted to be issued, the examination result of the application of issuing the internet mark, and the using state that indicates if the internet mark is valid at the time of the examination.

In a step 804 of Fig. 8, the process is executed of examining if the internet mark is permitted to be issued by checking if the homepage of the concerned enterprise exists in the URL of the received user information and if the concerned enterprise truly runs the described business. In a step 805, the examined result is stored in the using state of the mark user information DB 307.

In a step 806, the process is executed of checking the content of the examined result in the step 804. If the application passes the examination , the process goes to a step 807. If it does not pass the examination, the process goes to a step 812 in which the rejection of the application by the examination is reported to the mark user device 100. Then, the process is terminated.

In the step 807, the process is executed of determining the expiration date of the internet mark permitted to be issued and setting it to the corresponding item of the mark user information DB 307. In a step 808, the process is executed of transmitting to the mark management agent device 102 the information of the user about whom the application of issuing the internet mark is filed and the original image information for representing the original image data in which the user information is to be buried and then entrusting the generation of the internet mark to the mark agent.

As the original image information for representing the original image data, it is possible to transmit the original image data itself or pre-register the original image data in the mark management agent device 102 of each mark manager and then transmit the ID information for identifying the original image data. In this embodiment, the original image data is pre-registered in the mark management agent device 102 and then the manager ID is specified as the ID information for identifying the original image data. In addition, if a plurality of internet marks with their original image data are issued by one mark manager, it is also possible to set the manager ID and the original image ID for identifying the target original image datum.

In a step 809, the mark providing unit 312 is served to check if the internet mark to be generated is received from the mark management agent device 102. If the internet mark is received, the process goes to a step 810.

In the step 810, the process is executed of storing the information for indicating if the internet mark to be provided by the mark user is valid in the using state of the mark user information DB 307. In a step 811, the process is executed of transmitting the internet mark generated in the mark management agent device 102 to the mark user device 100 which has filed an application of issuing the concerned internet mark.

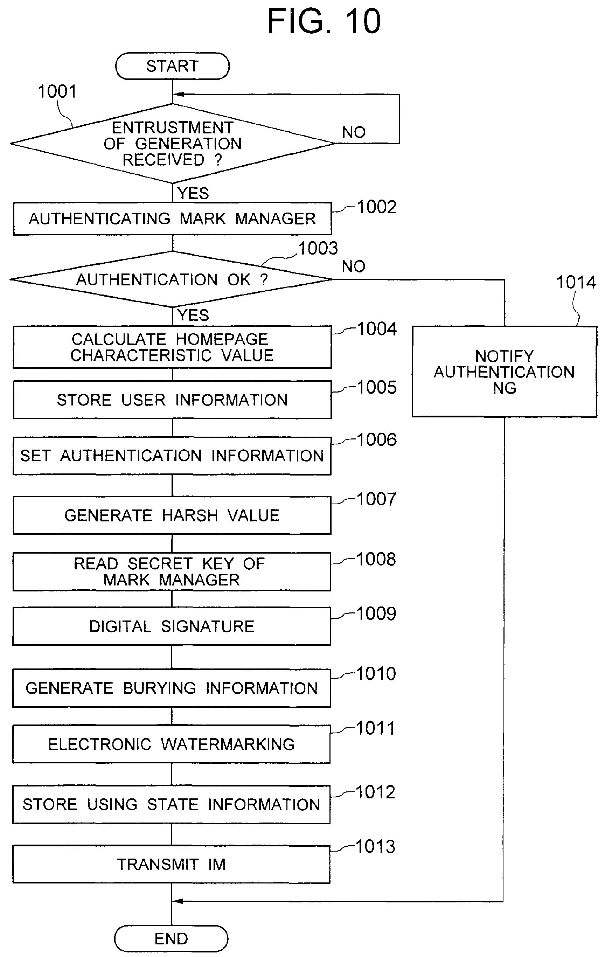

Fig. 10 is a flowchart showing a procedure of generating the mark included in this embodiment. As shown, the mark generating unit 410 provided in the mark management agent device 102 is served to accept a request of generating the internet mark from the mark manager device 101 and generate the internet mark by burying the information of the user about whom the internet mark is to be generated in the original image data represented by the original image information.

In a step 1001, the mark generating unit 410 provided in the mark management agent device 102 is served to check if the request of generating the internet mark is received from the mark manager device 101. If the request is received, the process goes to a step 1002.

In the step 1002, the process is executed of reading the manager ID for identifying the mark manager who are requesting to generate the mark while being requested and then checking if it is a correct ID by comparing it with the manager ID of the mark manager information DB 407. Herein, the use of a password is allowed for more strict authentication.

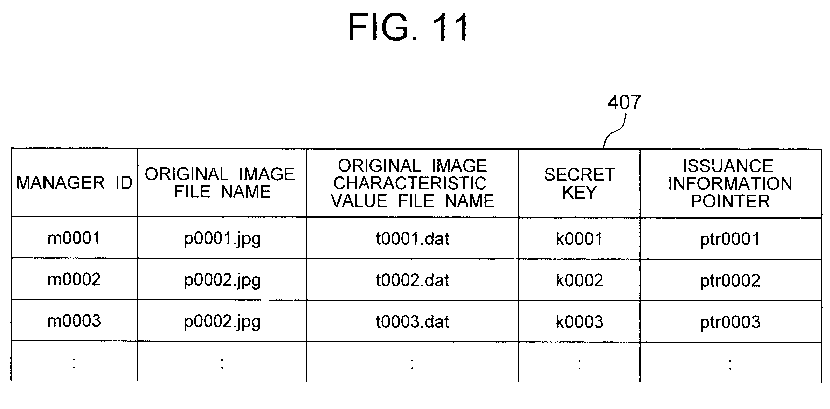

Fig. 11 shows an example of the mark manager information DB 407 included in this embodiment. As shown in Fig. 11, the mark manager information DB 407 of this embodiment stores a manager ID for identifying the mark manager, an original image file name, an original image characteristic value, a secret key, and a user information pointer for pointing to the issuance information management DB 408.

In a step 1003 of Fig. 10, the process is executed of determining if the target mark manager is correct by the authentication of the manger ID. If it is correct, the process goes to a step 1004. If it is not correct, the process goes to a step 1014 in which the fact that the mark manager is incorrect is notified to the mark manager device 101.

In the step 1004, the process is executed of calculating a characteristic value from the HTML file of the homepage of the mark user received through the mark manager device 101. In a step 1005, the user information received in the step 1001 and the homepage numeric value calculated in the step 1004 are stored in the issuance information management DB 408.

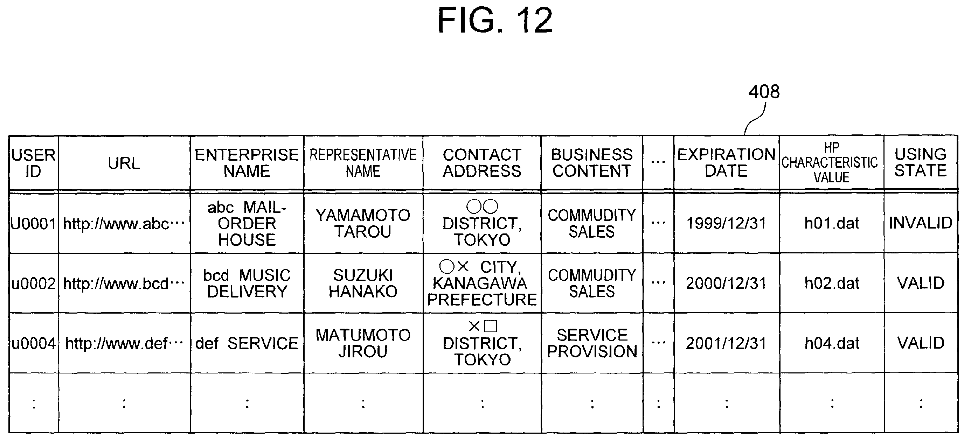

Fig. 12 shows an example of the issuance information management DB 408 included in this embodiment. As shown in Fig. 12, the issuance information management DB 408 of this embodiment includes a user ID for identifying a mark user, a URL served as the user information, an enterprise name, a representative name, a contact destination and a business content, an expiration date set by the mark manager, the calculated homepage characteristic value, and the using state for indicating if the internet mark is valid at that time. The mark manager information DB 407 corresponds with the issuance information management DB 408 by the user information pointer of the mark manager information DB 407. By specifying the user information pointer of the mark manager information DB 407, it is possible to read out the information on the mark user to which the internet mark managed by the mark manager is provided.

In a step 1006 of Fig. 10, the authentication information is generated by adding to the user information the expiration date, the homepage characteristic value, the original image characteristic value, the manager ID, and the user ID.

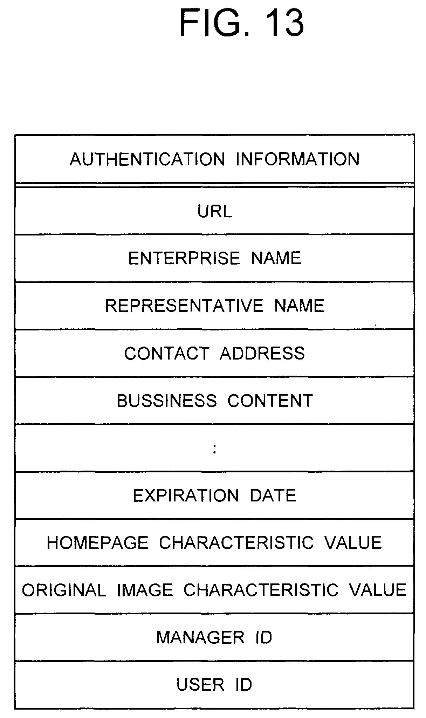

Fig. 13 shows an example of the authentication information of this embodiment. As shown in Fig. 13, the authentication information to be buried in the internet mark of this embodiment includes the URL served as the user information, the enterprise name, the representative name, the contact destination and the business content, the expiration date set by the mark manager, the calculated homepage characteristic value, the original image characteristic value stored in the mark manager information DB 407, the manager ID of the mark manager, and the user ID of the mark user.

In a step 1007 of Fig. 10, the process is executed of generating a harsh value of the generated authentication information. In a step 1008, the process is executed of reading a secret key of the mark manager who requests to generate the mark from the mark manager information DB 407. Then, in a step 1009, a digital signature is added to the generated harsh value with the secret key.

In a step 1010, the authentication information generated in the step 1006 is combined with the harsh value given the digital signature in the step 1009 for generating the burying information. In a step 1011, the generated burying information is buried in the original image as an electronic watermark for generating the internet mark.

In a step 1012, the information for indicating that the generated internet mark is valid is stored in the using state of the issuance information management DB 408. In a step 1013, the generated internet mark is transmitted to the mark manager device 101 which has requested to generate the internet mark.

Later, the description will be oriented to the process of updating the internet mark in the case of changing the information buried in the internet mark pasted on the homepage in the system of managing an electronic mark using an agent according to this embodiment.

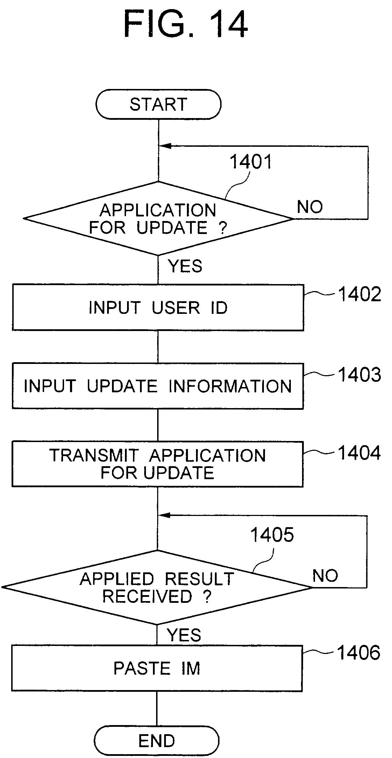

Fig. 14 is a flowchart showing a procedure of filing an application of updating a mark included in this embodiment. As shown in Fig. 14, the mark update applying unit 21 of the mark user device 100 is served to specify the updated portion of the user information buried in the internet mark and file an application of updating the internet mark to the mark manager device 101.

In this embodiment, in the case of changing the contents of the user information and the homepage such as the case of changing the business content of the homepage with the internet mark provided by a specific mark manager pasted thereon, the update of the internet mark is applied to the mark manager.

In a step 1401, the mark update applying unit 211 of the mark user device 100 is served to check if the mark user who has already used the internet mark enters a specification of applying an update. If yes, the process goes to a step 1402.

In the step 1402, the process is executed of entering the user ID obtained in receipt of that internet mark from the predetermined file where the user ID is stored at the obtaining time. In a step 1403, the updated user information is entered.

In a step 1404, the entered user ID and user information are sent to the mark manager device 101 which manages the issuance of the internet mark for the purpose of filing an application of updating the internet mark to the mark manager.

In a step 1405, the process is executed of checking if the application is received from the mark manager device 101. If yes, the process goes to a step 1406. If the applied internet mark is permitted to be issued, the internet mark received as the applied result is read out. Then, in a step 1406, the process is executed of adding a tag for displaying the read internet mark to the HTML file of the homepage and then pasting the resulting internet mark to the homepage.

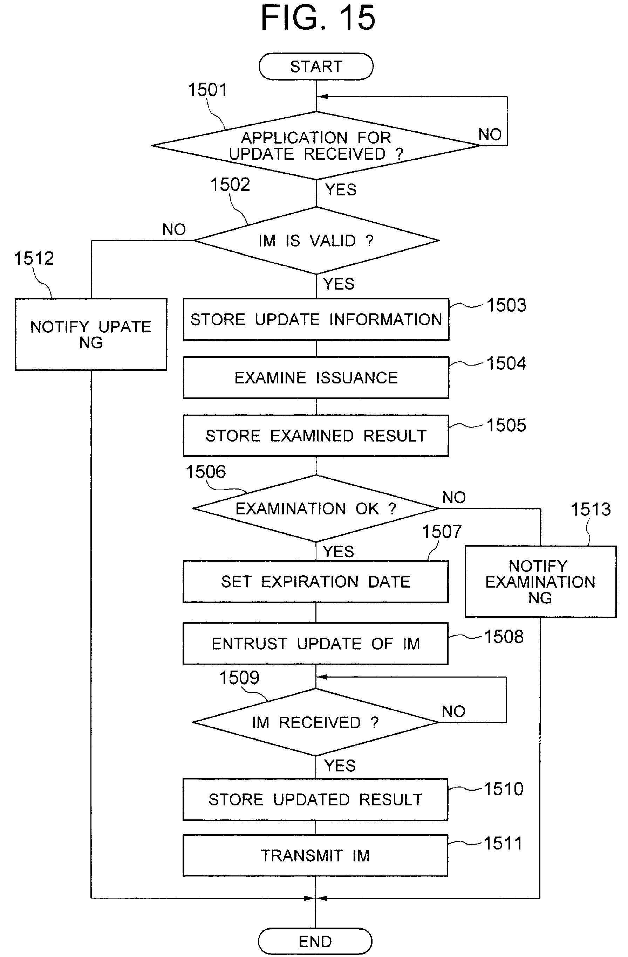

Fig. 15 is a flowchart showing a procedure of entrusting update of the mark included in this embodiment. As shown in Fig. 15, the mark update accepting unit 311 of the mark manager device 101 is served to accept the application of updating the internet mark from the mark user device 100. The update of the internet mark, together with the information of the user about whom the application of updating the internet mark is filed and the original image information for indicating the original image data where the user information is buried, is entrusted to the mark management agent device 102. The mark providing unit 312 is served to provide the internet mark updated in the mark management agent device 102 to the mark user of the mark user device 100 which has filed an application of updating the internet mark.

In a step 1501, the mark update accepting unit 311 of the mark manager device 101 is served to check if the application of updating the internet mark is received from the mark user device 100. If yes, the process goes to a step 1502.

In the step 1502, the using state of the internet mark corresponding to the ID of the user who has applied the update is read from the mark user information DB 307. Then, the process is executed if the internet mark is valid. If it is valid, the process goes to a step 1503. If it is invalid, the process goes to a step 1512, in which the fact that the internet mark is invalid is notified to the mark user device 100, and then the process is terminated.

In the step 1503, the new user information received as the application of updating the mark is stored in a record of the mark user information DB 307 identified by the ID of the user who has filed the update application.

In a step 1504, the process is executed of checking for the content of the new user information received as the update application and examining if the issuance of the internet mark on the new user information is permitted. Then, in a step 1505, the examined result is stored in the using state of the mark user information DB 307.

In a step 1506, the process is executed of checking for the content of the examined result. If it passes the examination, the process goes to a step 1507. If it does not pass the examination, the process goes to a step 1513, in which the fact that the content is rejected is notified to the mark user device 100, and then the process is terminated.

In the step 1507, the process is executed of determining the expiration date of the internet mark permitted to be updated and then setting it to the expiration date of the mark user information DB 307. In a step 1508, the information of the user about whom the application of updating the internet mark is filed and the original image information for representing the original image data where the user information is buried are sent to the mark management agent device 102. Then, the update of the internet mark is entrusted to the mark agent. Like the foregoing entrustment of the generation, the manager ID is used as the original image information for representing the original image data.

In a step 1509, the mark providing unit 312 is served to check if the internet mark to be updated is received from the mark management agent device 102. If it is not received, the process goes to a step 1510.

In the step 1510, the information for indicating that the internet mark to be provided to the mark user is valid is stored in the using state of the mark user information DB 307. In a step 1511, the internet mark updated in the mark management agent device 102 is transmitted to the mark user device 100 which filed an application of issuing the internet mark.

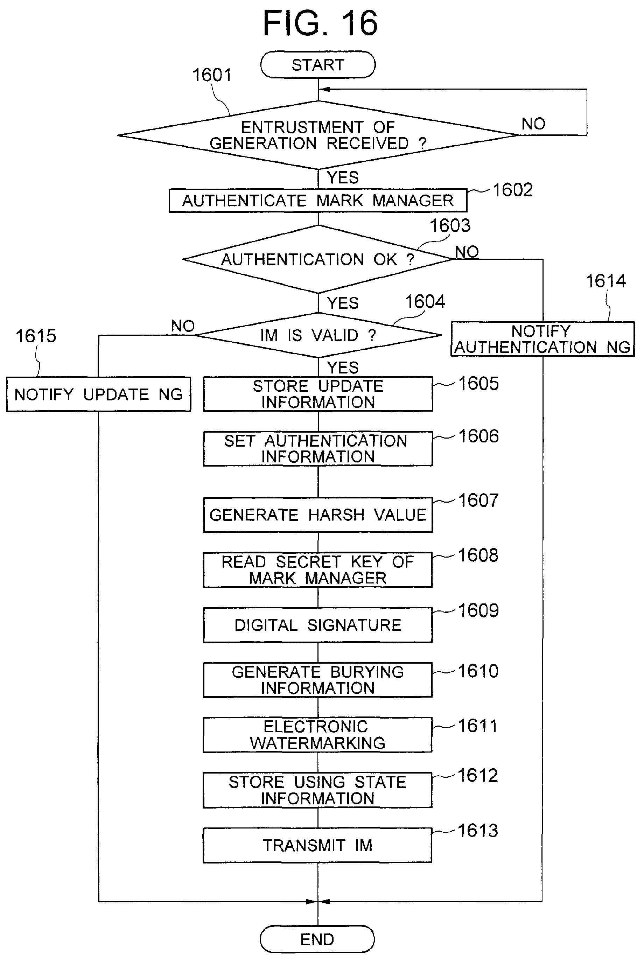

Fig. 16 is a flowchart showing a procedure of updating the mark included in this embodiment. As shown in Fig. 16, the mark updating unit 411 of the mark management agent device 102 is served to accept the request of updating the internet mark from the mark manager device 101 and then bury the information of the user about whom the internet mark is updated in the original image data represented by the original image information to be updated, for updating the internet mark.

In a step 1601, the mark updating unit 411 of the mark management agent device 102 is served to check if the request of updating the internet mark is received from the mark manager device 101. If it is received, the process goes to a step 1602.

In the step 1602, the process is executed of reading the manager ID for identifying the mark manager who requested to update the mark even while the update is in request and of comparing that manager ID with the manager ID of the mark manager information DB 407 for checking if it is a correct ID.

In a step 1603, the process is executed of determining if the mark manager is correct by the authentication of the manager ID. If the manager is correct, the process goes to a step 1604. If the manager is not correct, the process goes to a step 1614, in which the fact that the manager is not correct is notified to the mark manager device 101, and then the process is terminated.

In a step 1604, the process is executed of checking if the internet mark to be updated is valid by referring to the using state of the issuance information management DB 408. If it is valid, the process goes to a step 1605. If it is not valid, the process goes to a step 16015, in which the fact that the internet mark is not valid is notified to the mark manager device 101, and then the process is terminated.

In the step 1605, the user information received in the step 1601 is stored in the issuance information management DB 408. Further, if the updated portion is the content of the homepage and the new HTML file of the homepage is sent, the characteristic value is calculated and then is stored in the issuance information management DB 408.

In a step 1606, the authentication information is generated by referring to the information of the issuance information management DB 408 having the new information stored in the step 1605. In a step 1607, the harsh value of the generated authentication information is generated. In a step 1608, the secret key of the mark manager who requested to update the mark is read from the mark manager information DB 407. Then, in a step 1609, a digital signature is added to the generated hash value with the secret key.

In a step 1610, the authentication information generated in the step 1606 is combined with the hash value given the digital signature in the step 1609 for composing the burying information. In a step 1611, the composed burying information is buried in the original image data as an electronic watermark for generating the internet mark.

In a step 1612, the process is executed of storing the information for indicating if the generated internet mark is valid in the using state of the issuance information management DB 408. In a step 1613, the generated internet mark is transmitted to the mark manager device 101 which requested to update the internet mark.

Later, the description will be oriented to the process to be executed in the case that the mark manger changes the using state of the internet mark being issued in the system of managing an electronic mark using an agent.

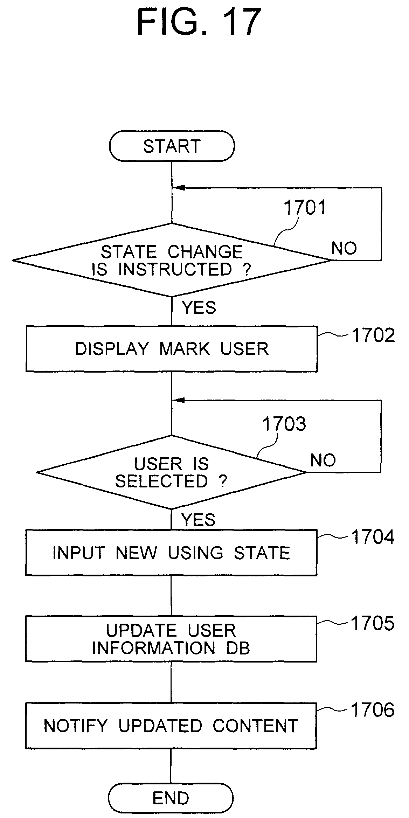

Fig. 17 is a flowchart showing a procedure of instructing change of the using state in this embodiment. As shown in Fig. 17, the using state change instructing unit 313 provided in the mark manager device 101 is served to accept the instruction of changing the using state of the internet mark from the mark manager, change the using state in the mark user information DB 307, and instruct the change of the using state of the internet mark to the mark management agent device 102.

In this embodiment, in the case of changing the using state of the internet mark such as the case of nullifying the mark being issued, the mark manager enters the instruction of changing the using state of the internet mark to the mark manager device 101.

In a step 1701, the using state change instructing unit 313 of the mark manager device 101 is served to check if an input of instructing the change of the using state of the internet mark is performed by the mark manager. If it is instructed, the process goes to a step 1702.

In the step 1702, the process is executed of displaying the user information in the mark user information DB 307 and accepting the selection of the mark user who would like to change the using state. In a step 1703, it is checked if the mark user is selected. If so, the process goes to a step 1704.

In a step 1704, the process is executed of inputting a new using sate of the internet mark provided to the mark user. In a step 1705, the inputted new using state is stored in the mark user information DB 307 so that the using state of the internet mark may be updated. In a step 1706, the process is executed of notifying the updated content to the mark management agent device 102 and instructing the change of the using state of the internet mark.

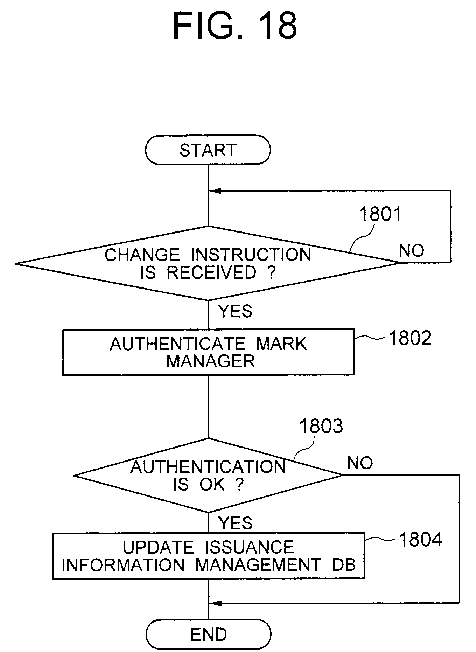

Fig. 18 is a flowchart showing a procedure of changing the using state in this embodiment. As shown in Fig. 18, the using state changing unit 413 of the mark management agent device 102 is served to accept the instruction of changing the using state of the internet mark from the mark manager device 101 and then change the using state of the internet mark stored in the issuance information management DB 408.

In a step 1801, the using state changing unit 413 of the mark management agent device 102 is served to check if the instruction of changing the using state of the internet mark is received from the mark manager device 101. If it is received, the process goes to a step 1802.

In the step 1802, the process is executed of reading the manager ID for identifying the mark manager who instructed the change while the change is being instructed and compare the read ID with the manager ID stored in the mark manager information DB 407 for checking if the read ID is correct.

In a step 1803, it is checked if the read ID is determined to be correct by the authentication of the manager ID. If it is determined to be correct, the process goes to a step 1804.

In the step 1804, the process is executed of changing the using state of the internet mark stored in the issuance information management DB 408 according to the content of the instruction for changing the using state, received in the step 1801.

Later, the description will be oriented to the process to be executed in the case of monitoring the expiration date of the internet mark through the mark management agent device 102 and changing the using state of the internet mark in the system of managing an electronic mark using an agent according to this embodiment.

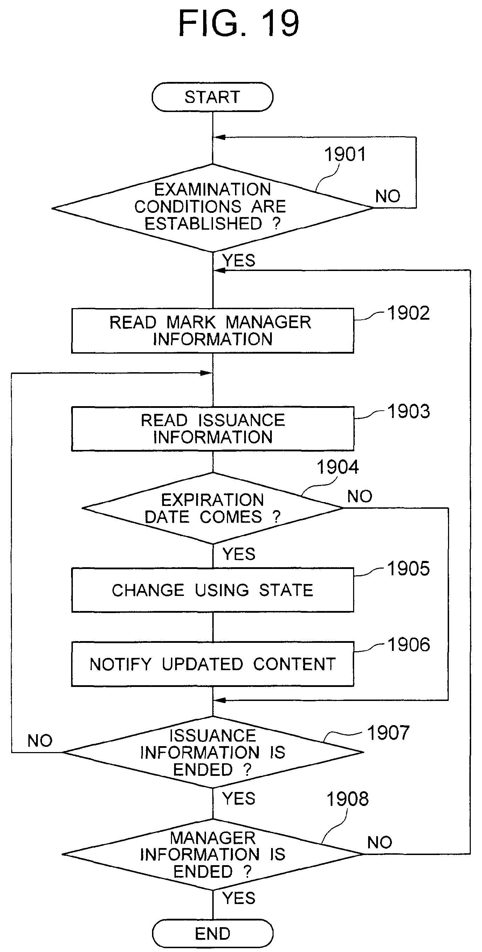

Fig. 19 is a flowchart showing a procedure of monitoring the using state included in this embodiment. As shown in Fig. 19, the using state monitoring unit 414 provided in the mark management agent device 102 is served to monitor the expiration date of the internet mark whose authentication information is managed in the issuance information management DB 408, change the using state of the expired internet mark into "invalid", and notify the mark manager device 101 of the change of the using state of the internet mark.

In a step 1901, the using state monitoring unit 414 provided in the mark management agent device 102 is served to check if the checking conditions for checking the expiration date are established. The conditions include such a condition that the current time passes a predetermined check start time. If the checking conditions are established, the process goes to a step 1902.

In the step 1902, the process is executed of reading the record of the mark manager information DB 407. In a step 1903, the process is executed of reading the record of the issuance information management DB 408 corresponding to the user information pointer of the read record in the mark manager information DB 407.

In a step 1904, it is checked if the current time passes the expiration date of the read record in the issuance information management DB 408. If the current time passes the expiration date, the process goes to a step 1905.

In the step 1905, the process is executed of changing the using information in the record included in the issuance information management DB 408 into "invalid". In a step 1906, the update of the using information is notified to the mark manager device 101.

In a step 1907, it is checked if the next record is stored in the issuance information management DB 408 corresponding to the user information pointer read in the step 1902. If the next record is found in the DB 408, the process returns to the step 1903, while if the next record is not found, the process goes to a step 1908.

In the step 1908, it is checked if the next record is in the mark manager information DB 407. If the next record is found in the DB 407, the process goes back to the step 1902. If the next record is not found in the DB 407, the process is terminated.

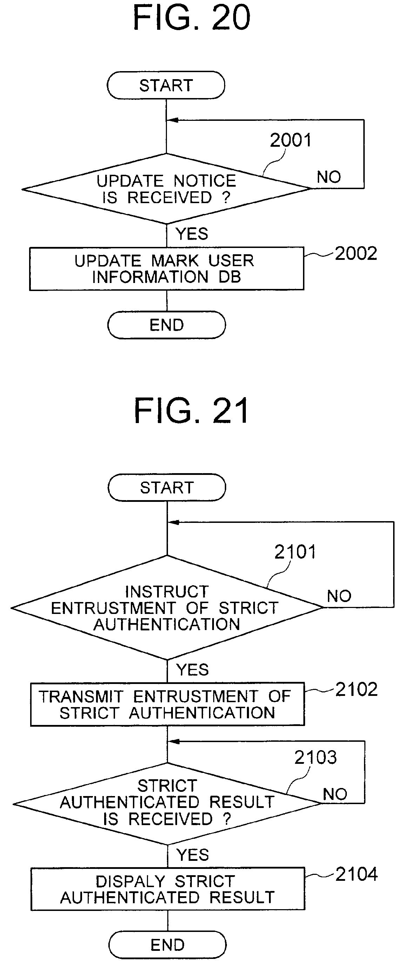

Fig. 20 is a flowchart showing a procedure of changing the using state included in this embodiment. As shown in Fig. 20, the using state changing unit 314 provided in the mark manager device 101 is served to accept the notice from the mark management agent device 102 and then change the using state of the mark user information DB 307 in response.

In a step 2001, the using state changing unit 314 provided in the mark manager device 101 is served to check if the notice of updating the using information is received from the mark management agent device 102. If it is received, the process goes to a step 2002, in which the corresponding using state included in the mark user information DB 307 is updated.

Later, the description will be oriented to the process of carrying out the basic authentication through the use of the internet mark on the side of the mark referring person device 103 and the process of carrying out the strict authentication through the use of the issuance information given when the internet mark was issued on the side of the mark management agent device 102.

At first, in response to the instruction given from a mark referring person, the mark referring person device 103 operates to carry out the basic authentication through the use of the information buried in the internet mark pasted on the homepage of the mark user device 100. That is, it is checked if the harsh value of the authentication information buried as the internet mark as an electronic watermark matches with the harsh value obtained by decoding the hash value given the digital signature with the open key. Then, it is also checked if the URL of the homepage matches with the URL in the authentication information. Further, it is checked if the current time does not reach the expiration date in the authentication information. Next, it is checked if the internet mark is determined to be valid by the basic authentication. If it is determined to be invalid by the basic authentication, the portion determined to be invalid is notified to the mark management agent device 102. The agent device 102 accepts the notice and records it as a log and then notifies the mark manager device 101 of the portion determined to be invalid.

Further, in response to the instruction given by the mark referring person, the mark referring person device 103 operates to carry out the strict authentication through the use of the issuance information given when the internet mark pasted on the homepage of the mark user device 100 was issued.

Fig. 21 is a flowchart showing a procedure of entrusting the strict authentication included in this embodiment. As shown in Fig. 21, the authentication entrusting unit 510 provided in the mark referring person device 103 is served to entrust execution of the strict authentication of the internet mark pasted on the homepage of the mark user device 100.

In this embodiment, the mark referring person who accesses the homepage opened by the mark user entrusts execution of the strict authentication of the internet mark if the person would like to know the strict authenticated result of the internet mark pasted on the homepage.

In a step 2101, the authentication entrusting unit 510 provided in the mark referring person device 103 is served to check if the mark referring person enters the authentication entrusting instruction for entrusting the strict authentication of the internet mark pasted on the homepage of the mark user device 100 to the mark management agent device 102. If the instruction of entrusting the authentication is entered, the process goes to a step 2102.

In the step 2102, the process is executed of transmitting the URL of the homepage to be authenticated into the mark management agent device 102 and then entrusting the strict authentication of the internet mark pasted on the homepage to the mark management agent device 102.

In a step 2103, the process is executed of checking if the authenticated result is received from the mark management agent device 102. If the authenticated result is received, the process goes to a step 2104, in which the received authenticated result is displayed.

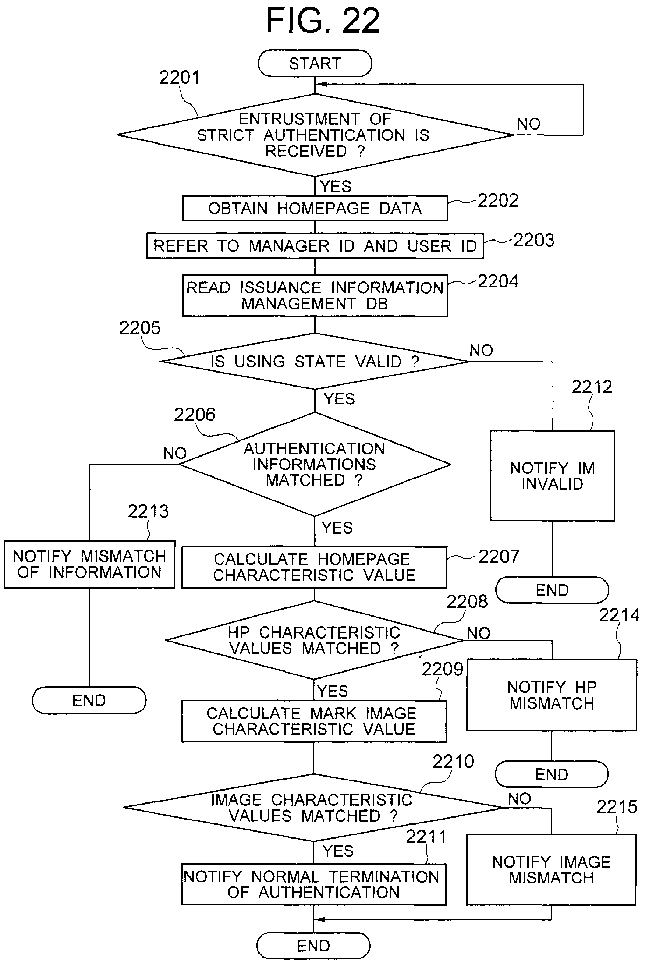

Fig. 22 is a flowchart showing a procedure of carrying out the strict authentication included in this embodiment. As shown in Fig. 22, the authenticating unit 412 provided in the mark management agent device 102 is served to accept a request of executing the strict authentication of the internet mark from the mark referring person device 103 and determine if the electronic data having the internet mark pasted thereof is interpolated by using the user information registered in the mark management agent device 102 in the generation of the internet mark or if the internet mark is valid.

In a step 2201, the authenticating unit 412 of the mark management agent device 102 is served to check if the request of executing the strict authentication of the internet mark is received from the mark referring person device 102. If it is received, the process goes to a step 2202.

In the step 2202, the process is executed of making access to the URL to be strictly authenticated, received in the step 2201 and thereby obtaining the HTML file of the homepage and the internet mark pasted on the homepage.

In a step 2203, the process is executed of referring to the manager ID and the user ID from the authentication information of the internet mark. In a step 2204, the process is executed of reading out the corresponding record included in the issuance information management DB 408 to the manager ID and the user ID.

In a step 2205, the process is executed of referring to the using information of the read record of the issuance information management DB 408 and checking if the internet mark is valid. If the using information of the DB 408 is "valid", the process goes to a step 2206. As mentioned above, the using state of the internet mark may be changed by the processes of the mark manager device 101 and the mark management agent device 102. Hence, the using information of the issuance information management DB 408 may indicate that the internet mark determined to be valid by the basic authentication is "invalid". If the using information of the DB 408 indicates the internet mark is "invalid", the process goes to a step 2212, in which the fact that the internet mark is invalid is notified to the mark referring person device 1103.

In a step 2206, it is checked if the authentication information of the internet mark matches with the information units of the read record in the issuance information management D 408. If so, the process goes to a step 2207. If not, the process goes to a step 2215, in which the fact that the internet mark contains a different piece of information from that given in issuing the mark is notified to the mark referring person device 103.

In a step 2207, the process is executed of calculating a characteristic value of the homepage obtained in the step 2202. In a step 2208, it is also checked if the calculated homepage characteristic value is matched with that in the record of the issuance information management DB 408. If both are matched, the process goes to a step 2209. If not matched, the process goes to a step 2214, in which the fact that the content of the homepage is not matched with that provided at the issuing time is notified to the mark referring person device 103, and then the process is terminated.

In the step 2209, the process is executed of calculating a characteristic value of the image of the internet mark. In a step 2210, it is also checked if the calculated image characteristic value is matched with the original image characteristic value in the record of the issuance information management DB 408. If matched, the process goes to a step 2211. If not matched, the process goes to a step 2215, in which the mismatch between the internet mark image and that given at the issuing time is notified to the mark referring person device 103, and then the process is terminated.

In a step 2211, the normal termination of the strict authentication of the internet mark in the mark management agent device 102 is notified to the mark referring person device 103. Then, the process is terminated.

In the electronic mark management agent system according to the embodiment, as set forth above, the mark manager acts for a manager of the electronic mark to be issued to the mark user. This thus makes it easier for the mark manager to issue the electronic mark and possible to keep the electronic mark issued by the mark manager at a predetermined quality level.

According to the invention, the mark manager acts for the manager of the electronic mark to be issued to the mark user. This thus makes it easier for the mark manager to issue the electronic mark and possible to keep the electronic mark issued by the mark manager at a predetermined quality level.

## Claims

1. A method of managing an electronic mark using an agent, comprising the steps of:
filing (210) an application of issuing an electronic mark together with information of a user to be buried on said electronic mark;
entrusting (210) generation of said electronic mark with the information of the user about whom said electronic mark is applied and original image information for representing original image data where said user information is to be buried;
generating (410) said electronic mark by said agent by burying the information of the user who applied for the issuing said electronic mark; and
providing (312) said generated electronic mark to a mark user who filed an application of issuing said electronic mark.

2. A method as claimed in claim 1, further comprising the step of updating said electronic mark where said user information is buried in the case of updating said user information.

3. A method as claimed in claim 1, further comprising the steps of:
entrusting authentication of said electronic mark pasted on electronic data; and
authenticating said electronic mark using issuance information provided when said electronic mark is generated.

4. A method as claimed in claim 2, further comprising the steps of:
entrusting authentication of said electronic mark pasted on electronic data; and
authenticating said electronic mark using issuance information provided when said electronic mark is generated.

5. A system of managing an electronic mark using an agent, comprising:
a mark issuance applying unit for filing an application of issuing an electronic mark together with information of a user buried in said electronic mark;
a mark issuance accepting unit for entrusting generation of said electronic mark together with the information of the user about whom said electronic mark is applied to be issued and original image information for representing original image data where said user information is to be buried;
a mark generating unit in said agent for generating said electronic mark by burying the information of the user who filed the application of issuing said electronic mark in the original image data represented by said original image information to be generated; and
a mark providing unit for providing said generated electronic mark to a mark user who filed the application of issuing said electronic mark.

6. A recording medium to be read by a computer, for recording a program for acting a computer as a system of managing an electronic mark using an agent, said program comprising:
a mark issuance applying means for filing an application of issuing said electronic mark together with information of a user to be buried in said electronic mark;
a mark issuance accepting means for entrusting generation of said electronic mark together with said information of the user about whom said electronic mark is applied to be issued and original image information for representing original image data where said user information is to be buried;
a mark generating means for generating said electronic mark by said agent by burying said information of the user who filed the application of issuing said electronic mark is to be generated in the original image data represented by the original image information to be generated; and
a mark providing means for providing said generated electronic mark to a mark user who filed an application of issuing said electronic mail.

7. An apparatus of managing an electronic mark using an agent, for generating said electronic mark in response to a request for issuing said mark from a mark manager apparatus, comprising:
a mark generating unit in said agent for generating an electronic mark in response to mark user information, mark manager information and original image data provided from said mark provider device;
mark manager information storing means for storing information about a mark manager and information about an original image in association with the former information;
mark issuance information managing and storing means for storing said generated mark and mark user information in association with said mark; and
a mark authenticating unit for authenticating said accepted mark using said mark manager information storing means and said mark issuance information managing and storing means in response to a request for authenticating said mark from a mark referring person device.

8. An apparatus of managing an electronic mark using an agent as claimed in claim 7, wherein said mark manager device operates to accept an application of issuing a mark from a mark user device, if said application passes an examination, entrust generation of said mark to said apparatus of managing said mark using the agent, accept said mark from said apparatus of managing said mark using the agent, and providing said mark to said mark user device.

9. An apparatus as claimed in claim 7, wherein one requisite for authentication of said mark authenticating unit is the fact that the using state is authenticated to be valid on the information on the mark manager and the mark user.

10. An apparatus as claimed in claim 8, wherein one requisite for authentication of said mark authenticating unit is the fact that the using state is authenticated to be valid on the information on the mark manager and the mark user.
